(19) Europäisches Patentamt
European Patent Office
Office européen des brevets

(11) **EP 3 580 521 B1**

(12) **FASCICULE DE BREVET EUROPEEN**

(45) Date de publication et mention
de la délivrance du brevet:
**24.11.2021 Bulletin 2021/47**

(21) Numéro de dépôt: **18706418.3**

(22) Date de dépôt: **02.02.2018**

(51) Int Cl.:
**G01B 9/02** *(2006.01)*      **G01B 11/06** *(2006.01)*

(86) Numéro de dépôt international:
**PCT/EP2018/052625**

(87) Numéro de publication internationale:
**WO 2018/146009 (16.08.2018 Gazette 2018/33)**

(54) **LIGNE A RETARD OPTIQUE, INTERFEROMETRE A FAIBLE COHERENCE IMPLEMENTANT CETTE LIGNE, DISPOSITIF ET PROCEDE DE MESURE METTANT EN OEUVRE CET INTERFEROMETRE**

OPTISCHE VERZÖGERUNGSLEITUNG, NIEDRIGKOHÄRENTES INTERFEROMETER ZUR IMPLEMENTIERUNG DIESER LEITUNG, MESSVERFAHREN UND VORRICHTUNG ZUR IMPLEMENTIERUNG DES INTERFEROMETERS

OPTICAL DELAY LINE, LOW-COHERENCE INTERFEROMETER IMPLEMENTING THIS LINE, MEASURING METHOD AND DEVICE IMPLEMENTING THIS INTERFEROMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2017 FR 1751103**

(43) Date de publication de la demande:
**18.12.2019 Bulletin 2019/51**

(73) Titulaire: **Fogale Nanotech**
**30900 Nîmes (FR)**

(72) Inventeur: **COURTEVILLE, Alain**
**30111 Congenies (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**FR-A1- 2 817 039      US-A- 5 028 137**
**US-A1- 2015 292 859**

**Description**

**Domaine technique**

La présente invention concerne une ligne à retard optique. Elle vise également un interféromètre à faible cohérence implémentant cette ligne, ainsi qu'un dispositif et procédé de mesure mettant en oeuvre cet interféromètre.

Le domaine de l'invention est en particulier celui de la mesure d'épaisseur de couches et de distances relatives dans des dimensions micrométriques ou nanométriques.

**Etat de la technique antérieure**

Les interféromètres à faible cohérence, en particulier mis en oeuvre dans le domaine temporel, nécessitent l'utilisation de lignes à retard optiques capables d'introduire des retards ou différences de marches entre faisceaux optiques correspondant aux étendues de mesure recherchées. La fréquence avec laquelle la ligne à retard peut balayer l'étendue de mesure correspond à la fréquence de mesure de l'interféromètre. Cette fréquence d'acquisition constitue d'ailleurs une limitation importante des interféromètres à faible cohérence dans le domaine temporel.

Parmi les techniques de lignes existantes, on connaît par le document FR 2817039 un dispositif de mesure optique implémentant un interféromètre à division d'amplitude. Ce document divulgue en particulier une ligne à retard basée sur un polygone à faces parallèles tournant qui permet de moduler le trajet optique le long d'un faisceau traversant le polygone de part en part. L'utilisation d'un dispositif en rotation permet de générer des différences de marche de plusieurs millimètres à des cadences élevées. Toutefois ce dispositif présente l'inconvénient que le trajet optique varie de manière fortement non-linéaire en fonction de la rotation du polygone, ce qui nécessite une détection avec une très grande bande passante pour détecter des interférogrammes dans toute l'étendue de mesure. Un autre inconvénient de ce dispositif est que le trajet optique dans le polygone est important, ce qui peut dégrader la qualité des mesures si le matériau du polygone est dispersif.

Les documents US5028137 A et US2015292859 A1 divulguent des lignes à retard basées sur un polygone à faces parallèles tournant qui permet de moduler le trajet optique le long de deux faisceaux traversant le polygone de part en part.

La présente invention a pour objectif de proposer un dispositif de ligne à retard optique qui permette une utilisation dans des interféromètres à faible cohérence dans le domaine temporel.

La présente invention a également pour objectif de proposer un dispositif de ligne à retard optique permettant d'introduire des variations de trajets optiques centimétriques à des fréquences élevées.

La présente invention a également pour objectif de proposer un dispositif de ligne à retard optique permettant d'introduire des variations de trajet optique à vitesse essentiellement constante.

La présente invention a également pour objectif de proposer un dispositif de ligne à retard optique permettant de minimiser la dispersion optique introduite.

**Exposé de l'invention**

Cet objectif est atteint avec une ligne à retard optique selon la revendication 1. La ligne à retard optique est destinée à être mise en œuvre dans un interféromètre, comprenant un polygone en rotation et un premier et un second réflecteur.

Selon l'invention, ce polygone est agencé pour moduler les trajets optiques respectifs d'un premier et d'un second faisceau lumineux, issus d'un même faisceau dit de mesure, et dirigés à travers le polygone respectivement vers les premier et second réflecteurs, de façon à générer un retard optique par différence entre les trajets optiques de ces premier et second faisceaux.

La ligne à retard optique selon l'invention comprend des éléments de conditionnement de faisceaux et un élément séparateur dit de décodage pour séparer le faisceau lumineux de mesure en premier et second faisceaux respectivement incidents sur une face du polygone identique ou différente selon respectivement un premier angle d'incidence et un second angle d'incidence, de sorte que ces premier et second faisceaux, en subissant respectivement deux réfractions sur deux faces parallèles du polygone, atteignent respectivement le premier et le second réflecteur et soient réfléchis puis dirigés via le polygone vers l'élément séparateur de décodage, ces premier et second faisceaux étant agencés de sorte que les premier et second angles d'incidence soient différents.

Les premier et second faisceaux sont de préférence agencés de sorte que les premier et second angles d'incidence varient en sens opposé pendant au moins une partie de la rotation du polygone.

Les premier et second faisceaux sont selon l'invention, agencés de sorte que lorsque l'un des premier ou second angle d'incidence varie entre une valeur minimale ou nulle et une valeur maximale, l'autre de ces premier ou second angle d'incidence varie entre cette valeur maximale et cette valeur minimale ou nulle.

Selon l'invention, les premier et second faisceaux sont agencés pour être incidents sur le polygone selon un axe passant par le centre de rotation du polygone.

Le polygone peut être un polygone à faces parallèles. Il peut comprendre par exemple quatre, six ou huit faces.

Il peut être réalisé par exemple dans l'un des matériaux suivants : un matériau d'indice de réfraction supérieur à 1,4, un matériau d'indice de réfraction supérieur à 2, un verre, du silicium (qui présente un indice de réfraction dans l'infrarouge de l'ordre de 3.6). Il est à noter que plus l'indice de réfraction est élevé, plus la différence de trajets optiques ou le retard introduit par un polygone de dimension donnée est élevé.

Les premier et second faisceaux peuvent être avantageusement dirigés vers le polygone avec au moins l'un des moyens suivants : des fibres optiques, un circuit d'optique intégrée avec des guides d'onde planaire, en propagation libre.

Suivant un autre aspect de l'invention, il est proposé un interféromètre à faible cohérence, implémentant une ligne à retard selon l'invention, comprenant une source lumineuse à spectre large, un élément séparateur de codage relié optiquement à la source lumineuse et agencé (i) pour émettre un faisceau lumineux de façon à illuminer un objet et (ii) pour transmettre un faisceau réfléchi par cet objet vers un élément séparateur de décodage agencé pour séparer ce faisceau réfléchi en deux premier et second faisceaux, un polygone en rotation et un premier et un second réflecteur au sein de la ligne à retard, le polygone en rotation étant prévu pour (i) recevoir en incidence les premier et second faisceaux et les diriger respectivement vers les premier et second réflecteurs et (ii) moduler les trajets optiques respectifs des premier et second faisceaux, et des moyens détecteurs reliés optiquement à l'élément séparateur de décodage et agencés pour traiter les premier et second faisceaux réfléchis de façon à détecter un signal représentatif d'interférences.

Dans un mode particulier de réalisation d'un interféromètre à faible cohérence selon l'invention, celui-ci comprend en outre un interféromètre laser comportant une source laser pour émettre un faisceau lumineux de métrologie et des moyens pour insérer ce faisceau de métrologie dans la ligne à retard et l'élément séparateur de décodage est en outre agencé pour séparer le faisceau de métrologie en deux premier et second faisceaux de métrologie superposés respectivement aux premier et seconds faisceaux incidents sur le polygone.

L'interféromètre à faible cohérence selon l'invention peut en outre avantageusement comprendre un détecteur de métrologie associé à la source laser via un élément séparateur de métrologie relié optiquement à l'élément séparateur de décodage, ainsi qu'au titre des moyens d'insertion du faisceau de métrologie, un multiplexeur/démultiplexeur optique interposé d'une part entre l'élément séparateur de métrologie et l'élément séparateur de décodage et d'autre part entre les moyens de détecteurs et l'élément séparateur de décodage.

Dans un mode particulièrement avantageux de réalisation d'un interféromètre à faible cohérence selon l'invention, celui-ci comprend en outre des moyens collimateurs disposés entre l'élément séparateur de codage et l'objet et prévus pour collimater ou focaliser le faisceau de mesure et générer par réflexion interne partielle un faisceau de référence, la différence de distances optiques totales entre l'élément séparateur de décodage et respectivement les premier et second réflecteurs le long des premier et second faisceaux étant ajustée de sorte à reproduire la distance optique souhaitée entre les moyens collimateurs et l'objet.

L'interféromètre selon l'invention peut en outre avantageusement comprendre des moyens de codage angulaire disposés sur un axe de rotation du polygone rotatif, ainsi que des moyens pour mesurer le déplacement de l'un et/ou l'autre des premier et second faisceaux respectivement sur l'un et/ou l'autre des premier et second réflecteurs.

Suivant encore un autre aspect de l'invention, il est proposé un dispositif de mesure optique sur un objet, implémentant un interféromètre à faible cohérence comprenant une source lumineuse à spectre large, un élément séparateur de codage relié optiquement à cette source lumineuse et agencé (i) pour émettre un faisceau lumineux de façon à illuminer l'objet et (ii) pour transmettre un faisceau réfléchi par cet objet vers un élément séparateur de décodage agencé pour séparer le faisceau réfléchi en deux premier et second faisceaux, un polygone en rotation et un premier et un second réflecteur au sein d'une ligne à retard selon l'invention, le polygone en rotation étant prévu pour (i) recevoir en incidence les premier et second faisceaux et les diriger respectivement vers les premier et second réflecteurs et pour (ii) moduler les trajets optiques respectifs des premier et second faisceaux, et des moyens détecteurs reliés optiquement à l'élément séparateur de décodage et agencés pour traiter les premier et second faisceaux réfléchis de façon à produire un signal représentatif d'interférences, ce dispositif de mesure optique comprenant en outre des moyens pour analyser ce signal représentatif d'interférence de façon à générer des données de mesure relatives à l'objet.

Suivant encore un autre aspect de l'invention, il est proposé un procédé pour effectuer des mesures optiques sur un objet, implémentant une technique d'interféromètre à faible cohérence mettant en oeuvre une source lumineuse à spectre large, un élément séparateur de codage relié optiquement à cette source lumineuse et agencé (i) pour émettre un faisceau lumineux de façon à illuminer l'objet et (ii) pour transmettre un faisceau réfléchi par cet objet vers un élément séparateur de décodage agencé pour séparer le faisceau réfléchi en deux premier et second faisceaux, un polygone en rotation et un premier et un second réflecteur au sein d'une ligne à retard selon l'invention, le polygone en rotation étant prévu pour (i) recevoir en incidence les premier et second faisceaux et les diriger respectivement vers les premier et second réflecteurs et pour (ii) moduler les trajets optiques respectifs des premier et second faisceaux, et des moyens détecteurs reliés optiquement à l'élément séparateur de décodage et agencés pour traiter les premier et second faisceaux réfléchis de façon à produire un signal représentatif d'interférences, ce procédé de mesure optique comprenant en outre une analyse de ce signal représentatif d'interférence de façon à générer des données de mesure relatives à l'objet.

La présente invention permet de générer des variations de trajets optiques de plus grande amplitude et surtout avec une bonne linéarité.

Avec la présente invention, il devient possible d'atteindre une fréquence et une amplitude de variation des trajets optiques bien plus élevées que celles obtenues par exemple avec un dispositif interférométrique tel que divulgué par le document FR 2817039. En particulier, l'amplitude de variation d'un trajet optique obtenue avec la présente invention est le double de celle obtenue avec le dispositif interférométrique divulgué dans le document d'art antérieur précité. A titre d'exemple, on peut observer une amplitude de 20 mm à plusieurs centaines de Hz avec un octogone en verre (n=1.5, diamètre 10cm).

Par ailleurs, la présente invention procure une bonne linéarité de la variation de trajet optique qui permet l'utilisation de détections à bande fréquentielle étroite plus sensibles. A l'inverse, dans le dispositif de mesure interférométrique divulgué dans le document FR 2817039, la variation de trajet optique est fortement non linéaire, ce qui génère des franges d'interférence dans une très grande plage de fréquence.

De plus, on observe avec la présente invention une compensation de la dispersion d'indice dans le polygone en rotation du fait qu'on mesure une différence entre faisceaux qui parcourent des trajets optiques de longueur sensiblement identique dans l'élément en rotation, au contraire de ce qui se passe dans le dispositif de mesure optique de l'art antérieur dans lequel un seul faisceau traverse le polygone et subit la dispersion d'indice due à toute l'épaisseur. Il est à noter que la dispersion d'indice représente la variation de l'indice de réfraction en fonction de la longueur d'onde, qui provoque notamment un élargissement des interférogrammes.

La présente invention rend également possible l'utilisation de matériaux à fort indice mais fortement dispersifs, permettant des variations de trajets optiques plus importantes. On peut citer par exemple le silicium (n = 3.6) avec des longueurs d'ondes IR (1310 nm / 1550 nm ...).

Le polygone peut être du même matériau que l'objet cible, par exemple du silicium, ce qui permet une compensation totale de la dispersion dans l'objet cible. Ce polygone est en rotation à vitesse constante, ce qui évite les phénomènes d'accélération/décélération et les vibrations.

**Description des figures et modes de réalisation**

D'autres avantages et particularités de l'invention apparaîtront à la lecture de la description détaillée de mises en oeuvre et de modes de réalisation nullement limitatifs, et des dessins annexés suivants :

- la figure 1 est une vue schématique d'un mode de réalisation de l'art antérieur qui illustre le principe de fonctionnement ;
- la figure 2 est une vue schématique d'un mode particulier de réalisation d'un dispositif de mesure optique interférométrique selon l'invention ; et
- la figure 3 illustre un exemple de l'évolution de la variation de trajet optique dans la ligne à retard selon l'invention en fonction de l'angle de rotation du polygone.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

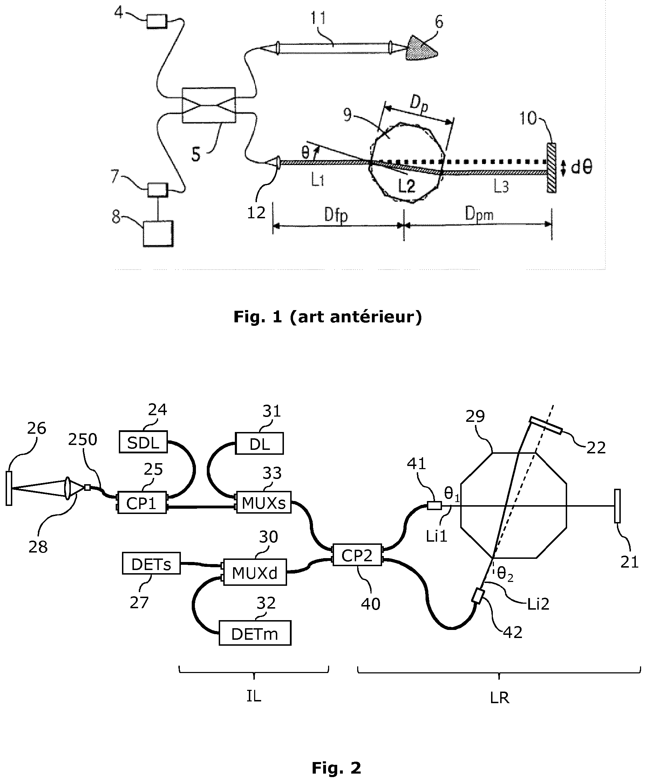

La figure 1 illustre un schéma de principe d'un interféromètre à faible cohérence de l'art antérieur basé sur un interféromètre de Michelson simple et mettant en oeuvre une ligne à retard basée sur un polygone tournant, tel que décrit dans le document FR 2817039.

Ce dispositif 1 comprend un interféromètre à fibre optique dans lequel une source de lumière 4 alimente un séparateur de faisceaux 5 sous la forme d'un coupleur 5. Les sources de lumière peuvent être des sources à spectre large telles que LED (Light Emitting Diode), S-LED (Super Light Emitting Diode), E-LED (Edge Light Emitting Diode) ou encore des sources super-fluorescentes.

Le coupleur 5 permet d'obtenir deux faisceaux lumineux, un premier faisceau lumineux 11 envoyé vers un objet 6 à mesurer, et un second faisceau lumineux 12 envoyé dans la ligne à retard vers un miroir 10. Ces deux faisceaux lumineux sont réfléchis puis renvoyés dans le coupleur 5 qui transmet le mélange de ces deux faisceaux lumineux vers un récepteur 7. La ligne à retard comprend un polygone 9, doté dans le mode de réalisation présenté de huit faces, et disposé en amont du miroir 10. Ce polygone est en rotation.

Le second faisceau lumineux provenant du coupleur 5 traverse le polygone 9 en subissant deux réfractions sur deux faces parallèles avant d'atteindre le miroir 10. A chaque instant, ce faisceau pénètre dans le polygone 9 par une face dont la normale fait un angle d'incidence θ par rapport à la direction d'incidence du faisceau. Du fait de la traversée des faces parallèles, ce second faisceau lumineux traversant le polygone sort toujours parallèle à lui-même quelle que soit la valeur de l'angle θ. Le miroir 10 est agencé de sorte à être perpendiculaire au faisceau, ce qui permet de renvoyer ce faisceau sur lui-même et de le coupler dans la même fibre optique après une nouvelle traversée du polygone 9.

Le second faisceau lumineux de la ligne à retard ne subit pas de réflexion totale à l'intérieur du polygone qui constitue une lame à faces parallèles dont l'épaisseur varie en fonction de l'angle d'incidence θ.

Dans le dispositif 1, le rôle de la ligne à retard est de réaliser une opération de corrélation temporelle entre les signaux issus de l'objet 6 et du miroir 10. On obtient ainsi en sortie du récepteur 7 un interférogramme dépendant du retard introduit par la ligne à retard.

Il est à noter que le dispositif pourrait aussi être traité en propagation libre, sans fibres optiques.

Dans le mode de réalisation présenté, le dispositif comprend un collimateur 12 qui permet de collimater ou focaliser le second faisceau lumineux issu de la fibre optique à une distance correspondant à celle du miroir 10 au travers du polygone 9.

Comme expliqué précédemment, l'angle d'incidence θ(t) varie en fonction de la rotation du polygone 9.

Entre le collimateur 12 pris comme point de référence et le miroir, le second faisceau parcourt un chemin optique dans la ligne à retard :

$$L(\theta) = L_1(\theta) + L_2(\theta) + L_3(\theta) \qquad (Eq. \ 1)$$

Où $L_1(\theta)$ est la distance optique parcourue par le faisceau entre le collimateur et la face d'entrée du polygone 9, $L_2(\theta)$ est la distance optique parcourue par le faisceau à l'intérieur du polygone 9 et $L_3(\theta)$ est la distance optique parcourue par le faisceau entre le polygone 9 et le miroir 10. On rappelle que les distances optiques correspondent aux distances géométriques multipliées par l'indice de réfraction du milieu.

Pour un octogone dont la distance entre les faces est $D_p$ et l'indice de réfraction n, on a :

$$L_1(\theta) = D_{fp} - \frac{D_p}{2 \cos \theta} \qquad (Eq. \ 2)$$

$$L_2(\theta) = n^2 \frac{D_p}{\sqrt{n^2 - \sin^2 \theta}} \qquad (Eq. \ 3)$$

$$L_3(\theta) = D_{pm} - \frac{D_p}{2 \cos \theta} + d(\theta) \tan \theta \qquad (Eq. \ 4)$$

$D_{fp}$ représente la distance entre collimateur et le centre de rotation du polygone 9, le long de l'axe du faisceau issu du collimateur. $D_{pm}$ représente la distance entre le centre de rotation du polygone 9 et le miroir, le long du même axe. $d(\theta)$ représente le déplacement du faisceau à la sortie du polygone, qui s'exprime conne suit :

$$d(\theta) = D_p \sin \theta \left[ 1 - \frac{\cos \theta}{\sqrt{n^2 - \sin^2 \theta}} \right] \qquad (Eq. \ 5)$$

On va maintenant décrire, en référence à la figure 2, un exemple particulier de réalisation d'un dispositif de mesure optique interférométrique selon l'invention.

Ce dispositif de mesure interférométrique 2, équipé de fibres optiques, comprend un interféromètre à faible cohérence doté d'une source lumineuse 24 réalisée par exemple sous la forme d'une diode superluminescente à spectre large (environ 80 nm) autour d'une longueur d'onde de 1310 nm. Cette source lumineuse 24 est reliée par une fibre optique à un coupleur de codage 25 qui émet via une fibre optique de mesure 250 un faisceau de mesure illuminant via un collimateur 28 un objet à mesurer 26. La lumière réfléchie est transmise par le coupleur de codage 25 vers un coupleur de décodage 40.

La lumière réfléchie peut être constituée des réflexions du faisceau de mesure sur les interfaces de l'objet 26 et facultativement d'une onde de référence générée par exemple par réflexion de Fresnel à l'extrémité de la fibre de mesure 250 au niveau du collimateur 28 ou par tout autre moyen. Cette onde de référence peut permettre de mesurer des distances sans être affecté par des perturbations dans les fibres optiques.

La lumière réfléchie est séparée par le coupleur de décodage 40 en deux faisceaux Li1, Li2 dirigés vers un polygone de rotation 29 au sein d'une ligne à retard LR selon l'invention. Ces faisceaux Li1, Li2, après modulation de leur trajet optique par le polygone 40 et réflexions sur des réflecteurs miroirs 21, 22, sont dirigés par le coupleur de décodage 40 vers un détecteur 27.

Lorsqu'on reproduit un retard entre deux réflexions du faisceau transmis, par exemple entre un faisceau de mesure réfléchi par une interface de l'objet et le faisceau de référence, dans la ligne à retard LR, on obtient un pic d'interférence sur le détecteur 27. La largeur de ce pic d'interférences correspond à la longueur de cohérence de la source. Les distances optiques totales entre le coupleur de décodage 40 et les miroirs 21, 22 le long des faisceaux Li1, Li2 sont ajustées en fonction de la distance de travail souhaitée entre le collimateur 28 (ou le faisceau de référence) et l'objet 26.

On peut ainsi mesurer des épaisseurs optiques entre couches de l'objet 26 et/ou des distances par rapport à la référence.

Le dispositif de mesure optique 2 comprend en outre un interféromètre laser IL pour effectuer une mesure directe de la différence de trajets optiques introduite entre les faisceaux Li1, Li2 dans la ligne à retard LR. Cet interféromètre laser IL comprend une source laser de métrologie 31, par exemple une diode laser émettant à une longueur d'onde de 1550 nm, avec une longueur de cohérence supérieure aux différences de trajet optique atteignables dans la ligne à retard LR. Il comprend également un premier multiplexeur 33 pour insérer un faisceau de métrologie émis par la source laser de métrologie 31 dans la ligne à retard LR de sorte que ce faisceau de métrologie soit séparé par le coupleur de décodage 40 en deux faisceaux de métrologie superposés respectivement aux deux faisceaux Li1, Li2. L'interféromètre laser IL comprend également un démultiplexeur 30 permettant de séparer en retour les faisceaux lumineux de l'interféromètre à faible cohérence (à 1310 nm) et de l'interféromètre laser (à 1550 nm) issus du coupleur de décodage 40, de façon à transmettre respectivement ces faisceaux réfléchis à un détecteur de métrologie 32 pour mesurer un signal d'interférence de métrologie continu entre les faisceaux de métrologie issus respectivement des faisceaux incidents Li1, Li2, et au détecteur 27 de l'interféromètre à faible cohérence.

L'analyse du signal d'interférence de métrologie permet d'obtenir une mesure de la variation de trajet optique dans la ligne à retard LR, telle qu'elle est également subie par les faisceaux de l'interféromètre à faible cohérence. Cette analyse peut comporter à titre d'exemple non limitatif un dépliement de phase ou une détection de passage par zéro.

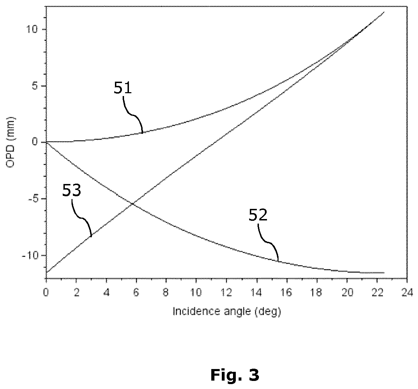

On va maintenant décrire plus en détail, en référence aux figures 2 et 3, un exemple de réalisation de la ligne à retard LR et de ses différents composants.

Dans le mode de réalisation présenté, le polygone 29 comprend huit faces. La distance $D_p$ entre faces est égale à 10 cm. Le polygone 29 est réalisé en verre (BK7) dont l'indice de réfraction n est de l'ordre de 1.5. On peut également envisager un matériau à fort indice supérieur à 2, tel que du silicium d'indice 3.6 qui est transparent pour des longueurs d'onde dans le proche infrarouge.

Si le polygone 29 est en rotation à une vitesse constante correspondant à une fréquence de rotation de 100 Hz, dans la mesure où on peut réaliser 16 mesures par tour (deux par face), on obtient ainsi une fréquence de mesure de 1.6 kHz.

Le premier faisceau Li1 est incident sur le polygone selon un angle $\theta_1$ qui est l'angle entre la normale à la face d'entrée et la direction d'incidence du faisceau.

Le second faisceau Li2 est incident sur le polygone selon un angle $\theta_2$ qui est l'angle entre la normale à la face d'entrée et la direction d'incidence du faisceau.

Pour des raisons de simplicité et parce que cela n'influe pas sur les calculs des trajets optiques, dans toute cette description les angles d'incidence $\theta_1$ et $\theta_2$ sont comptés en valeur absolue, ou non signée.

Les axes ou les directions d'incidence respectifs des faisceaux incidents Li1 et Li2 sont agencés pour passer par le centre de rotation du polygone. Cette condition n'est pas indispensable mais permet d'exploiter au mieux et de manière symétrique l'étendue de variation de chemin optique procurée par chaque face.

Les faisceaux incidents Li1, Li2 sont agencés pour que les angles d'incidence respectifs $\theta_1$ et $\theta_2$ sur les faces d'entrée varient en sens opposé, au moins pendant une partie de la rotation du polygone. En effet, lorsque ces angles varient en sens opposé, les variations respectives de trajet optique le long des faisceaux incidents Li1, Li2 varient également en sens opposé et donc leurs différences se cumulent. De préférence, pour optimiser l'amplitude de variation des trajets optiques, on ajuste les angles d'incidence respectifs $\theta_1$ et $\theta_2$ de telle sorte que :

$$\theta_2 = \theta_{max} - \theta_1, \qquad\qquad (\text{Eq. 6})$$

$\theta_{max}$ étant l'angle d'incidence maximal (également en valeur absolue on non signée) sur une face d'un faisceau dont la direction d'incidence passe par le centre de rotation du polygone.

Dans ces conditions, cet angle $\theta_{max}$ est atteint lorsque le faisceau atteint une face du polygone à une extrémité, vers une arête entre deux faces successives.

Comme expliqué précédemment, les faisceaux incidents Li1, Li2 peuvent également être agencés de sorte à présenter une différence d'angle d'incidence maximale inférieure à $\theta_{max}$ mais dans ce cas on limite l'étendue de mesure exploitable car les angles d'incidences $\theta_1$ et $\theta_2$ varient dans le même sens pendant une partie de la rotation du polygone.

A titre d'exemple non limitatif tel qu'illustré en figure 2, les faisceaux incidents Li1, Li2 sont ajustés de sorte que lorsque :

- $\theta_1$ = 0 (faisceau Li1 incident perpendiculaire et au centre de la face d'entrée), alors
- $\theta_2 = \theta_{max}$ (faisceau Li2 incident selon un angle d'incidence maximal sur une face, vers une arête de cette face).

Lorsque le polygone 29 comporte huit faces, $\theta_{max}$ = 22.5 degrés. Plus généralement, pour un polygone à N faces, $\theta_{max}$ = 360 /N/2.

Ainsi, lors du passage d'une face devant, respectivement, les faisceaux Li1, Li2, les angles d'incidence varient de la manière suivante, en valeur absolue :

$\theta_1$ = 22.5 ... 0 ... 22.5, et $\theta_2$ = 0 ... 22.5 ... 0

Dans ces conditions, la variation de trajet optique dans la ligne à retard LR correspond à :

$$DL(\theta_1) = 2\,[Li1(\theta_1) - Li2(\theta_2)]$$
$$= 2\,[L_1(\theta_1) + L_2(\theta_1) + L_3(\theta_1) - L_1(\theta_{max} - \theta_1) - L_2(\theta_{max} - \theta_1) - L_3(\theta_{max} - \theta_1)].$$

$$(Eq.\ 7)$$

Pour détecter des débuts et fins de course, le dispositif peut comprendre un codeur angulaire sur l'axe de rotation du polygone. On peut également utiliser les interruptions de faisceau lors des passages des arêtes entre faces pour détecter ces transitions.

La figure 3 illustre des résultats obtenus avec un polygone à huit faces, présentant une distance entre faces $Dp$ égale à 10 cm et un indice de réfraction n égal à 1.5.

La courbe 51 illustre la variation de trajet optique totale (OPD) le long du faisceau lumineux 12 en fonction de l'angle d'incidence $\theta$ telle qu'obtenue avec la ligne à retard de l'art antérieur illustrée à la figure 1. On constate que cette courbe est fortement non-linéaire, avec en outre une vitesse de variation nulle pour 0=0. Dans ces conditions, la fréquence des franges d'interférence sur les détecteurs varie du quasi-continu à des fréquences élevées, et nécessite donc des bandes passantes de détection très importantes et peu favorables à une détection à faible bruit.

La courbe 51 illustre également la variation de trajet optique totale $2*Li1$ le long du premier faisceau incident Li1 dans le dispositif de l'invention.

La courbe 52 illustre la variation de trajet optique totale (OPD) $2*Li2$ le long du second faisceau incident Li2 dans le dispositif de l'invention.

Les courbes 51 et 52 sont normalisées par rapport à leur valeur à l'origine.

La courbe 53 illustre la variation de trajet optique totale DL en fonction de l'angle d'incidence $\theta$ du premier faisceau incident Li1 telle qu'obtenue avec la ligne à retard de l'invention, par différence entre les trajets optiques $2*Li1$ et $2*Li2$. On constate que cette variation de trajet optique présente une excellente linéarité, ce qui permet l'utilisation de détections à bande étroite. En outre, on obtient une variation de trajet optique (ou étendue de mesure) correspondant au double de celle atteignable avec un seul faisceau incident (plus de 20mm).

Suivant des variantes de modes de réalisation, les faisceaux incidents Li1, Li2 peuvent être situés sur une même face ou sur une face différente du polygone.

Suivant des variantes de mode de réalisation, les faisceaux de la métrologie laser peuvent être distincts des faisceaux incidents Li1, Li2 de l'interféromètre à faible cohérence. Dans ce cas la métrologie laser peut être réalisée sous la forme d'un interféromètre distinct de l'interféromètre à faible cohérence.

Suivant des variantes de mode de réalisation, on peut concevoir dans le cadre de la présente invention plusieurs interféromètres sur un même polygone.

En particulier, plusieurs faisceaux peuvent être superposés dans le sens de l'épaisseur du polygone, et/ou plusieurs voies peuvent être prévues sur plusieurs faces.

Bien sûr, l'invention n'est pas limitée aux exemples qui viennent d'être décrits et de nombreux aménagements peuvent être apportés à ces exemples sans sortir du cadre de l'invention.

**Revendications**

1.  Ligne à retard optique (LR) destinée à être mise en œuvre dans un interféromètre, comprenant

    - un polygone en rotation (29),
    - un premier et un second réflecteur (21, 22),
    - un élément séparateur de décodage (40), l'élément séparateur de décodage étant agencé pour recevoir un faisceau de lumière, dit faisceau de mesure, et pour séparer ce faisceau de lumière dans un premier faisceau lumineux et un second faisceau lumineux (Li1, Li2),
    - des moyens agencés pour diriger le premier faisceau lumineux et le second faisceau lumineux vers le polygone (29), **caractérisée en ce que** :
    - ledit polygone (29) est agencé pour moduler les trajets optiques respectifs desdits premier et second faisceau lumineux (Li1, Li2), issus du même faisceau de mesure, et dirigés à travers ledit polygone (29) respectivement vers lesdits premier et second réflecteurs (21, 22), de façon à générer un retard optique par différence entre les trajets optiques desdits premier et second faisceaux (Li1, Li2) ;lesdits premier et second faisceaux (Li1, Li2) sont :

        - respectivement incidents sur une face dudit polygone (29) identique ou différente selon respectivement un premier angle d'incidence ($\theta$1) et un second angle d'incidence ($\theta$2), de sorte que lorsque l'un des premier ou second angle d'incidence ($\theta$1, $\theta$2) varie entre une valeur minimale ou nulle et une valeur maximale, l'autre desdits premier ou second angle d'incidence ($\theta$1, $\theta$2) varie entre ladite valeur maximale et ladite valeur minimale ou nulle, et
        - agencés pour être incidents sur le polygone (29) selon un axe passant par le centre de rotation dudit polygone (29).

2.  Ligne à retard optique (LR) selon la revendication 1, **caractérisée en ce qu'**elle comprend en outre des éléments de conditionnement de faisceaux et ledit élément séparateur dit de décodage (40) pour séparer le faisceau lumineux de mesure en lesdits premier et second faisceaux (Li1, Li2) respectivement incidents sur une face dudit polygone (29) identique ou différente, de sorte que lesdits premier et second faisceaux, en subissant respectivement deux réfractions sur deux faces parallèles dudit polygone (29), atteignent respectivement le premier et le second réflecteur (21, 22) et soient réfléchis puis dirigés via ledit polygone (29) vers l'élément séparateur de décodage (40), lesdits premier et second faisceaux (Li1, Li2) étant agencés de sorte que lesdits premier et second angles d'incidence ($\theta$1, $\theta$2) soient différents.

3.  Ligne à retard (LR) selon la revendication 2, **caractérisée en ce que** les premier et second faisceaux (Li1, Li2) sont agencés de sorte que les premier et second angles d'incidence ($\theta$1, $\theta$2) varient en sens opposé pendant au moins une partie de la rotation du polygone (29).

4.  Ligne à retard selon l'une quelconque des revendications précédentes, **caractérisé en ce que** le polygone (29) est un polygone à faces parallèles.

5.  Ligne à retard selon l'une quelconque des revendications précédentes, **caractérisé en ce que** le polygone (29) est réalisé dans l'un des matériaux suivants : un matériau d'indice de réfraction supérieur à 1,4, un matériau d'indice de réfraction supérieur à 2, un verre, du silicium.

6.  Ligne à retard (LR) selon l'une des revendications précédentes, **caractérisée en ce que** les premier et second faisceaux (Li1, Li2) sont dirigés vers le polygone (29) avec au moins l'un des moyens suivants : des fibres optiques, un circuit d'optique intégrée avec des guides d'onde planaire, en propagation libre.

7.  Interféromètre à faible cohérence, implémentant une ligne à retard (LR) selon l'une quelconque des revendications précédentes, comprenant une source lumineuse à spectre large (24), un élément séparateur de codage (25) relié optiquement à ladite source lumineuse (24) et agencé (i) pour émettre un faisceau lumineux de façon à illuminer un objet (26) et (ii) pour transmettre un faisceau réfléchi par ledit objet (26) vers l'élément séparateur de décodage (40), de la ligne à retard (LR), agencé pour séparer ledit faisceau réfléchi en deux premier et second faisceaux (Li1, Li2), , le polygone en rotation (29) de la ligne à retard (LR) étant prévu pour (i) recevoir en incidence les premier et second faisceaux (Li1, Li2) et les diriger respectivement vers lesdits premier et second réflecteurs (21, 22) et (ii) moduler les trajets optiques respectifs desdits premier et second faisceaux (Li1, Li2), et des moyens détecteurs (27) reliés optiquement audit élément séparateur de décodage (40) et agencés pour traiter lesdits premier et second faisceaux réfléchis de façon à détecter un signal représentatif d'interférences.

8. Interféromètre à faible cohérence selon la revendication 7, **caractérisé en ce qu'**il comprend en outre un interféromètre laser (IL) comportant une source laser (31) pour émettre un faisceau lumineux de métrologie et des moyens pour insérer ledit faisceau de métrologie dans la ligne à retard (LR) et **en ce que** l'élément séparateur de décodage (40) est en outre agencé pour séparer ledit faisceau de métrologie en deux premier et second faisceaux de métrologie superposés respectivement aux premier et seconds faisceaux (Li1, Li2) incidents sur le polygone (29).

9. Interféromètre à faible cohérence selon la revendication 8, **caractérisé en ce qu'**il comprend en outre un détecteur de métrologie (32) associé à la source laser (31) via un élément séparateur de métrologie (30) relié optiquement à l'élément séparateur de décodage (40).

10. Interféromètre à faible cohérence selon la revendication 9, **caractérisé en ce qu'**il comprend en outre, au titre des moyens d'insertion du faisceau de métrologie, un multiplexeur/démultiplexeur optique (33) interposé d'une part entre l'élément séparateur de métrologie (30) et l'élément séparateur de décodage (40) et d'autre part entre les moyens de détecteurs (27) et ledit élément séparateur de décodage (40).

11. Interféromètre à faible cohérence selon l'une des revendications 7 à 10, **caractérisé en ce qu'**il comprend en outre des moyens collimateurs (28) disposés entre l'élément séparateur de codage (25) et l'objet (26) et prévus pour collimater ou focaliser le faisceau de mesure et générer par réflexion interne partielle un faisceau de référence, la différence de distances optiques totales entre l'élément séparateur de décodage (40) et respectivement les premier et second réflecteurs (21, 22) le long des premier et second faisceaux (Li1, Li2) étant ajustée de façon à reproduire la distance optique souhaitée entre lesdits moyens collimateurs (28) et ledit objet (26).

12. Interféromètre selon l'une quelconque des revendications 7 à 11, **caractérisé en ce qu'**il comprend en outre des moyens de codage angulaire disposés sur un axe de rotation du polygone rotatif.

13. Interféromètre selon l'une quelconque des revendications 7 à 12, **caractérisé en ce qu'**il comprend en outre des moyens pour mesurer le déplacement de l'un et/ou l'autre des premier et second faisceaux respectivement sur l'un et/ou l'autre des premier et second réflecteurs (21, 22).

14. Dispositif (2) de mesure optique sur un objet (26), implémentant un interféromètre à faible cohérence comprenant une source lumineuse à spectre large (24), une ligne à retard (LR) selon l'une quelconque des revendications 1-6, un élément séparateur de codage (25) relié optiquement à ladite source lumineuse (24) et agencé (i) pour émettre un faisceau lumineux de façon à illuminer ledit objet (26) et (ii) pour transmettre un faisceau réfléchi par ledit objet (26) vers la ligne à retard (LR), le polygone en rotation (29) de la ligne en retard (LR) étant prévu pour (i) recevoir en incidence lesdits premier et second faisceaux et les diriger respectivement vers lesdits premier et second réflecteurs (21, 22) et pour (ii) moduler les trajets optiques respectifs desdits premier et second faisceaux (Li1, Li2), et des moyens détecteurs (27) reliés optiquement audit élément séparateur de décodage (40) et agencés pour traiter lesdits premier et second faisceaux réfléchis de façon à produire un signal représentatif d'interférences, ce dispositif de mesure optique (2) comprenant en outre des moyens pour analyser ce signal représentatif d'interférence de façon à générer des données de mesure relatives audit objet.

15. Procédé pour effectuer des mesures optiques sur un objet (26), implémentant une technique d'interféromètre à faible cohérence mettant en oeuvre une source lumineuse à spectre large (24), un élément séparateur de codage (25) relié optiquement à ladite source lumineuse (24) et agencé (i) pour émettre un faisceau lumineux de façon à illuminer ledit objet (26) et (ii) pour transmettre un faisceau réfléchi par ledit objet (26) vers une ligne à retard (LR) selon l'une quelconque des revendications 1 à 6, le polygone en rotation (29) de la ligne à retard (LR) étant prévu pour (i) recevoir en incidence lesdits premier et second faisceaux (Li1, Li2) et les diriger respectivement vers lesdits premier et second réflecteurs (21, 22) et (ii) pour moduler les trajets optiques respectifs desdits premier et second faisceaux (Li1, Li2), et des moyens détecteurs (27) reliés optiquement audit élément séparateur de décodage (40) et agencés pour traiter lesdits premier et second faisceaux réfléchis de façon à produire un signal représentatif d'interférences, ce procédé de mesure optique comprenant en outre une analyse de ce signal représentatif d'interférence de façon à générer des données de mesure relatives audit objet (26).

**Patentansprüche**

1.  Optische Verzögerungsleitung (LR) zur Verwendung in einem Interferometer, umfassend

    - ein drehbares Polygon (29),
    - einen ersten und einen zweiten Reflektor (21, 22)
    - ein dekodierendes Trennelement (40), wobei das dekodierende Trennelement dazu eingerichtet ist, einen Lichtstrahl, den sogenannten Messstrahl, zu empfangen und diesen Lichtstrahl in einen ersten Lichtstrahl und in einen zweiten Lichtstrahl (Li1, Li2) zu teilen,
    - Mittel, welche angeordnet sind, um den ersten Lichtstrahl und den zweiten Lichtstrahl auf das Polygon (29) zu richten, **dadurch gekennzeichnet, dass**:
    - das Polygon (29) so angeordnet ist, um den jeweiligen optischen Weg des ersten Lichtstrahls und des zweiten Lichtstrahls (Li1, Li2) zu modulieren, die von dem gleichen Messstrahl ausgehen und durch das Polygon (29) hindurch jeweils auf den ersten und auf den zweiten Reflektor (21, 22) derart gerichtet werden, um eine optische Verzögerung durch einen Unterschied zwischen den optischen Wegen des ersten und des zweiten Strahls (Li1, Li2) zu erzeugen; die ersten und die zweiten Strahlen (Li1, Li2) sind:

        - jeweils auf eine gleiche oder eine unterschiedliche Seite des Polygons (29) jeweils in einem ersten Einfallswinkel ($\theta$1) und in einem zweiten Einfallswinkel ($\theta$2) derart einfallen, dass, wenn einer des ersten oder des zweiten Einfallwinkels ($\theta$1, $\theta$2) zwischen einem Mindestwert oder Null und einem Höchstwert variiert, der andere des ersten oder des zweiten Einfallswinkels ($\theta$1, $\theta$2) zwischen dem Höchstwert und dem Mindestwert oder Null variiert, und
        - derart angeordnet sind, um auf das Polygon (29) entlang einer Achse einzufallen, welche durch den Drehpunkt des Polygons (29) verläuft.

2.  Optische Verzögerungsleitung (LR) nach Anspruch 1, **dadurch gekennzeichnet, dass** sie außerdem Strahlkonditionierungselemente und das sogenannte dekodierende Trennelement (40) zur Teilung des Messlichtstrahls in den ersten und den zweiten Strahl (Li1, Li2) umfasst, welche jeweils auf eine gleiche oder eine unterschiedliche Seite des Polygons (29) derart einfallen, dass der erste und der zweite Strahl jeweils durch zweifache Brechung auf zwei parallel verlaufenden Seiten des Polygons (29) jeweils den ersten und den zweiten Reflektor (21, 22) erreichen und reflektiert dann über das Polygon (29) auf das dekodierende Trennelement (40) gerichtet werden, wobei der erste und der zweite Strahl (Li1, Li2) derart angeordnet sind, dass der erste und der zweite Einfallswinkel ($\theta$1, $\theta$2) unterschiedlich sind.

3.  Verzögerungsleitung (LR) nach Anspruch 2, **dadurch gekennzeichnet, dass** der erste und der zweite Strahl (Li1, Li2) derart angeordnet sind, dass der erste und der zweite Einfallswinkel ($\theta$1, $\theta$2) während mindestens eines Teils der Drehbewegung des Polygons (29) in entgegengesetzten Richtungen variieren.

4.  Verzögerungsleitung nach einem der vorhergehenden Ansprüche, **dadurch gekennzeichnet, dass** das Polygon (29) ein Polygon mit parallel verlaufenden Seiten ist.

5.  Verzögerungsleitung nach einem der vorhergehenden Ansprüche, **dadurch gekennzeichnet, dass** das Polygon (29) aus einem der folgenden Materialien ausgeführt ist: einem Material mit einem Brechungsindex größer als 1,4, einem Material mit einem Brechungsindex größer als 2, einem Glas, Silizium.

6.  Verzögerungsleitung (LR) nach einem der vorhergehenden Ansprüche, **dadurch gekennzeichnet, dass** der erste und der zweite Strahl (Li1, Li2) mit Hilfe mindestens einer der folgenden Mittel: optischen Fasern, einer integrierten optischen Schaltung mit planaren Wellenleitern, mit freier Ausbreitung auf das Polygon (29) gerichtet sind.

7.  Niedrigkohärenzinterferometer, das eine Verzögerungsleitung (LR) nach einem der vorhergehenden Ansprüche implementiert, umfassend eine Lichtquelle mit Breitspektrum (24), ein kodierendes Trennelement (25), das optisch mit der Lichtquelle (24) verbunden und derart angeordnet ist, um (i) einen Lichtstrahl auszusenden, um ein Objekt (26) zu beleuchten, und (ii) einen von dem Objekt (26) reflektierten Strahl auf das dekodierende Trennelement (40) der Verzögerungsleitung (LR) überträgt, derart angeordnet, um den reflektierten Strahl in zwei erste und zweite Strahlen (Li1, Li2) zu teilen, wobei das drehbare Polygon (29) der Verzögerungsleitung (LR) derart vorgesehen ist, dass es (i) den einfallenden ersten und den zweiten Strahl (Li1, Li2) empfängt und sie jeweils auf den ersten und den zweiten Reflektor (21, 22) richtet und (ii) den jeweiligen optischen Weg des ersten und des zweiten Strahls (Li1, Li2) moduliert, und wobei Erfassungsmittel (27), die optisch mit dem dekodierenden Trennelement (40) verbunden und derart angeordnet sind, um den ersten und den zweiten reflektierten Strahl derart zu verarbeiten, um ein eine Interferenz repräsentierendes Signal zu erfassen.

8. Niedrigkohärenzinterferometer nach Anspruch 7, **dadurch gekennzeichnet, dass** es außerdem ein Laserinterferometer (IL) umfasst, welches eine Laserquelle (31) zum Aussenden eines Messlichtstrahls und Mittel zum Einführen des Messlichtstrahls in die Verzögerungsleitung (LR) und dadurch, dass das dekodierende Trennelement (40) außerdem derart angeordnet ist, dass es den Messlichtstrahl in zwei erste und zweite Messlichtstrahlen teilt, die jeweils dem ersten bzw. zweiten auf das Polygon (29) einfallenden Messlichtstrahl (Li1, Li2) überlagert sind.

9. Niedrigkohärenzinterferometer nach Anspruch 8, **dadurch gekennzeichnet, dass** es außerdem einen Messdetektor (32) umfasst, welcher mit der Laserquelle (31) über ein mit dem dekodierenden Trennelement (40) optisch verbundenes Mess- Trennelement (30) gekoppelt ist.

10. Niedrigkohärenzinterferometer nach Anspruch 9, **dadurch gekennzeichnet, dass** es außerdem als Mittel zur Einfügung des Messstrahls einen optischen Multiplexer/Demultiplexer (33) umfasst, welcher einerseits zwischen dem Mess-Trennelement (30) und dem dekodierenden Trennelement (40) und andererseits zwischen den Detektormittel (27) und dem dekodierenden Trennelement (40) angeordnet ist.

11. Niedrigkohärenzinterferometer nach einem der Ansprüche 7 bis 10,

   **dadurch gekennzeichnet, dass** es außerdem Kollimatormittel (28) zwischen dem dekodierenden Trennelement (25) und dem Objekt (26) umfasst, welche zum Kollimieren oder Fokussieren des Messstrahls und zum Erzeugen eines Referenzstrahls durch partielle interne Reflexion vorgesehen sind,
   wobei die Differenz der gesamten optischen Abstände zwischen dem dekodierenden Trennelement (40) und dem ersten und zweiten Reflektor (21, 22) entlang des ersten bzw. zweiten Strahls (Li1, Li2) so eingestellt wird, dass der gewünschte optische Abstand zwischen dem Kollimatormittel (28) und dem Objekt (26) reproduziert wird.

12. Interferometer nach einem der vorhergehenden Ansprüche 7 bis 11, **dadurch gekennzeichnet, dass** es außerdem Winkelkodiermittel umfasst, die auf einer Drehachse des drehbaren Polygons angeordnet sind.

13. Interferometer nach einem der Ansprüche 7 bis 12, **dadurch gekennzeichnet, dass** es außerdem Mittel zum Messung der Verschiebung des einen und/oder des anderen des ersten und des zweiten Strahls jeweils auf den einen und/oder den anderen des ersten und des zweiten Reflektors (21, 22) umfasst.

14. Vorrichtung (2) zur optischen Messung an einem Objekt (26), mit einem Niedrigkohärenzinterferometer, umfassend eine Lichtquelle mit breitem Spektrum (24), eine Verzögerungsleitung (LR) nach einem der Ansprüche 1-6, ein kodierendes Trennelement (25), das mit der Lichtquelle (24) optisch verbunden ist und derart angeordnet ist, um (i) einen Lichtstrahl derart auszusenden, dass das Objekt (26) beleuchtet wird, und (ii) einen durch das Objekt (26) hin zur Verzögerungsleitung (LR) reflektierten Strahl zu übertragen, wobei das drehbare Polygon (29) der Verzögerungsleitung (LR) dazu vorgesehen ist, (i) den ersten und den zweiten Strahl einfallend zu empfangen und sie jeweils auf den ersten und den zweiten Reflektor (21, 22) zu richten und um (ii) die jeweiligen optischen Wege des ersten und des zweiten Strahls (Li1, Li2) zu modulieren, und mit dem dekodierenden Trennelement (40) optisch verbundene Detektormittel (27), die zur Verarbeitung des ersten und des zweiten Strahls angeordnet sind, um ein für die Interferenzen repräsentatives Signal zu erzeugen, wobei diese optische Messvorrichtung (2) außerdem Mittel zur Analyse des die Interferenzen repräsentierenden Signals umfasst, um Messdaten über dieses Objekt zu erzeugen.

15. **Verfahren** zur Durchführung von optischen Messungen an einem Objekt (26), das eine Methode des Niedrigkohärenzinterferometers implementiert, welches eine Lichtquelle mit Breitspektrum (24), ein kodierendes Trennelement (25), das optisch mit der Lichtquelle (24) verbunden und so angeordnet ist, dass es (i) einen Lichtstrahl aussendet, um den Gegenstand (26) zu beleuchten und (ii) einen von dem Objekt (26) reflektierten Strahl hin zu einer Verzögerungsleitung (LR) nach einem der Ansprüche 1 bis 6 überträgt, wobei das drehbare Polygon (29) der Verzögerungsleitung (LR) derart angeordnet ist, dass es (i) den ersten und den zweiten Strahl (Li1, Li2) einfallend empfängt und sie jeweils auf den ersten und den zweiten Reflektor (21, 22) richtet und (ii) zur Modulation der jeweiligen optischen Wege des ersten und zweiten Strahls (Li1, Li2), und Detektormittel (27), die optisch mit dem dekodierenden Trennelement (40) verbunden und derart angeordnet ist, dass sie den ersten und den zweiten reflektierten Strahl verarbeitet, um ein für die Interferenzen repräsentatives Signal zu erzeugen, wobei das optische Messverfahren außerdem eine Analyse des für die Interferenzen repräsentativen Signals umfasst, um Messdaten in Bezug auf das Objekt (26) zu erzeugen.

**Claims**

1.  Optical delay line (LR) intended to be implemented in an interferometer, comprising:

    - a polygon in rotation (29),
    - a first and a second reflector (21, 22),
    - a decoding splitter element (40), the decoding splitter element being arranged to receive a beam of light, called measurement beam, and for splitting this beam of light into a first light beam and a second light beam (Li1, Li2),
    - means arranged to direct the first light beam and the second light beam towards the polygon (29), **characterized in that**:
    - said polygon (29) is arranged to modulate the respective optical paths of said first and second light beam (Li1, Li2), originating from the same measurement beam, and directed through said polygon (29) respectively towards said first and second reflectors (21, 22), so as to generate an optical delay by difference between the optical paths of said first and second beams (Li1, Li2); said first and second beams (Li1, Li2) are:

        - respectively incident on a face of said polygon (29) identical or different according to respectively a first angle of incidence ($\theta$1) and a second angle of incidence ($\theta$2), so that when one of the first or second angle of incidence ($\theta$1, $\theta$2) varies between a minimum value or zero and a maximum value, the other one of said first or second angle of incidence ($\theta$1, $\theta$2) varies between said maximum value and said minimum value or zero, and
        - arranged to be incident on the polygon (29) along an axis passing though the centre of rotation of said polygon (29).

2.  Optical delay line (LR) according to claim 1, **characterized in that** it further comprises beam shaping elements and said splitter element called decoding splitter element (40) for splitting the measurement light beam into said first and second beams (Li1, Li2) respectively incident on a face of said polygon (29), identical or different, so that said first and second beams, when undergoing respectively two refractions on two parallel faces of said polygon (29), respectively reach the first and the second reflector (21, 22) and are reflected then directed via said polygon (29) to the decoding splitter element (40), said first and second beams (Li1, Li2) being arranged so that said first and second angles of incidence ($\theta$1, $\theta$2) are different.

3.  Delay line (LR) according to claim 2, **characterized in that** the first and second beams (Li1, Li2) are arranged so that the first and second angles of incidence ($\theta$1, $\theta$2) vary in opposite directions during at least a part of the rotation of the polygon (29).

4.  Delay line according to any one of the preceding claims, **characterized in that** the polygon (29) is a polygon with parallel faces.

5.  Delay line according to any one of the preceding claims, **characterized in that** the polygon (29) is produced from one of the following materials: a material with refractive index greater than 1.4, a material with refractive index greater than 2, a glass, silicon.

6.  Delay line (LR) according to one of the preceding claims, **characterized in that** the first and second beams (Li1, Li2) are directed towards the polygon (29) with at least one of the following means: optical fibres, an integrated optical circuit with planar waveguides, in free propagation.

7.  Low-coherence interferometer, implementing a delay line (LR) according to any one of the preceding claims, comprising a broad-spectrum light source (24), a coding splitter element (25) optically coupled to said light source (24) and arranged (i) to emit a light beam so as to illuminate an object (26) and (ii) to transmit a beam reflected by said object (26) towards the decoding splitter element (40) of the delay line (LR), arranged to split said reflected beam into two, first and second, beams (Li1, Li2), the polygon in rotation (29) of the delay line (LR) being provided (i) to receive the first and second incident beams (Li1, Li2) and direct them respectively towards said first and second reflectors (21, 22) and (ii) to modulate the respective optical paths of said first and second beams (Li1, Li2), and detector means (27) optically coupled to said decoding splitter element (40) and arranged to process said first and second reflected beams so as to detect a signal representative of interferences.

8. Low-coherence interferometer according to claim 7, **characterized in that** it also comprises a laser interferometer (IL) comprising a laser source (31) for emitting a metrology light beam and means for inserting said metrology beam in the delay line (LR) and **in that** the decoding splitter element (40) is also arranged to separate said metrology beam into two, first and second, metrology beams superimposed respectively on the first and second beams (Li1, Li2) incident on the polygon (29).

9. Low-coherence interferometer according to claim 8, **characterized in that** it also comprises a metrology detector (32) associated with the laser source (31) via a metrology splitter element (30) optically coupled to the decoding splitter element (40).

10. Low-coherence interferometer according to claim 9, **characterized in that** it also comprises, by way of means of insertion of the metrology beam, an optical multiplexer/demultiplexer (33) interposed on the one hand between the metrology splitter element (30) and the decoding splitter element (40) and on the other hand between the detector means (27) and said decoding splitter element (40).

11. Low-coherence interferometer according to one of claims 7 to 10, **characterized in that** it also comprises collimator means (28) placed between the coding splitter element (25) and the object (26) and provided to collimate or focus the measurement beam and generate, by partial internal reflection, a reference beam, the difference in total optical distances between the decoding splitter element (40) and respectively the first and second reflectors (21, 22) along the first and second beams (Li1, Li2) being adjusted so as to reproduce the desired optical distance between said collimator means (28) and said object (26).

12. Interferometer according to any one of claims 7 to 11, **characterized in that** it also comprises angular coding means placed on an axis of rotation of the rotary polygon.

13. Interferometer according to any one of claims 7 to 12, **characterized in that** it also comprises means for measuring the displacement of one and/or the other of the first and second beams respectively on one and/or the other of the first and second reflectors (21, 22).

14. Device (2) for optical measurement on an object (26), implementing a low-coherence interferometer comprising a broad-spectrum light source (24), a delay line (LR) according to any one of claims 1-6, a coding splitter element (25) optically coupled to said light source (24) and arranged (i) to emit a light beam so as to illuminate said object (26) and (ii) to transmit a beam reflected by said object (26) towards the delay line (LR), the polygon in rotation (29) of the delay line (LR) being provided (i) to receive said first and second incident beams and direct them respectively towards said first and second reflectors (21, 22) and (ii) to modulate the respective optical paths of said first and second beams (Li1, Li2), and detector means (27) optically coupled to said decoding splitter element (40) and arranged to process said first and second reflected beams so as to produce a signal representative of interferences, this optical measurement device (2) further comprising means for analysing this signal representative of interference so as to generate measurement data relative to said object.

15. Method for carrying out optical measurements on an object (26), implementing a low-coherence interferometer technique, implementing a broad-spectrum light source (24), a coding splitter element (25) optically coupled to said light source (24) and arranged (i) to emit a light beam so as to illuminate said object (26) and (ii) to transmit a beam reflected by said object (26) towards a delay line (LR), according to any one of claims 1 to 6, the polygon in rotation (29) of the delay line (LR) being provided (i) to receive said first and second incident beams (Li1, Li2) and direct them respectively towards said first and second reflectors (21, 22) and (ii) to modulate the respective optical paths of said first and second beams (Li1, Li2), and detector means (27) optically coupled to said decoding splitter element (40) and arranged to process said first and second reflected beams so as to produce a signal representative of interferences, this optical measurement method further comprising an analysis of this signal representative of interference so as to generate measurement data relative to said object (26).

**Fig. 1 (art antérieur)**

**Fig. 2**

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2817039
- US 5028137 A
- US 2015292859 A1